# NEW EUROPEAN PATENT SPECIFICATION

(11) **EP 2 522 533 B2**
(45) Date of publication and mention of the opposition decision: **20.09.2017**
(45) Mention of the grant of the patent: 29.01.2014
(21) Application number: 11165390.3
(22) Date of filing: 10.05.2011
(51) Int. Cl.: B60G 11/08, B60G 17/027, B60G 11/10, B60G 21/05

(54) **Adjustable suspension**
Verstellbare Aufhängung
Suspension ajustable

(43) Date of publication of application: 14.11.2012
(73) Proprietor: Volvo Car Corporation, 40 531 Göteborg (SE)
(72) Inventor: Malm, Åke, 44636, Älvängen (SE); Sjösten, Kjell, 42166, Västra Frölunda (SE)
(74) Representative: Andersson, Per Rune

(56) References cited:
- EP-A1- 1 645 445
- EP-A2- 0 763 438
- EP-A2- 0 994 270
- EP-B1- 0 760 750
- DE-A1- 1 480 478
- DE-A1- 10 323 732
- DE-A1-102009 028 899
- DE-T2- 69 813 647
- JP-A- 4 121 215
- JP-U- H0 679 610
- JP-U- H01 158 206
- KR-B1- 100 888 101
- US-A- 4 422 666
- US-A- 5 016 861
- US-B1- 6 273 441

## Description

### Description/Technical Field

The invention relates to a suspension for a vehicle where the suspension comprises a subframe connected to a chassis of the vehicle, a first lower control arm and a second lower control arm connected to the subframe. A leaf spring is transversally mounted in the suspension and is arranged to be connected to the first lower control arm and the second lower control arm and to the subframe. The invention also relates to a method for adjusting a suspension and a leaf spring system.

### Background Art

Suspensions for vehicles such as cars or trucks usually comprise coil springs of different sizes in order to set the correct spring rate for a particular vehicle. The spring rate of the suspension may be set depending on the weight of the vehicle, the vehicles intended use or driver preferences.

In order to be able to meet the demands listed a large number of coil springs with different spring rates have to be kept in stock. During assembly when a specific spring rate is required an assembler has to find the correct set of coil springs out of several tens or even hundreds of sets having different spring rates. The system for marking the coil springs may be complicated due to the large number of coil springs. Being able to locate the correct set of springs may be difficult and time consuming. A further disadvantage of using coil springs is that they are heavy and bulky.

In some vehicles a leaf spring is used instead of a coil spring. The leaf spring may be mounted longitudinally or transversely. By using different types of arrangements the characteristic of the leaf spring may be changed.

US 2010/0320658 A1 discloses a leaf spring arrangement where the characteristics of the leaf spring may be changed by an apparatus where the apparatus has at least one tension and/or compression spring for changing the spring rate of a leaf spring to which the apparatus can be attached, wherein a mounting device for mounting the tension and/or compression spring on the leaf spring is connected to a first end of the tension and/or compression spring. The apparatus also includes at least one spiral spring for additionally affecting the leaf spring rate and an attachment device for mechanically connecting the spiral spring to the leaf spring and for variably adjusting the spacing between at least one spiral spring section and the leaf spring.

However, this arrangement is mechanically complicated and does not allow for an easy adjustment of the spring characteristics. Clearly a need for an improved suspension comprising a leaf spring exists.

US 5,016,861 discloses vehicle comprising an upwardly bowed single transverse leaf spring. The leaf spring includes longitudinally spaced central mounting areas between which a longitudinal mid-portion of the spring extends. The mounting areas each comprise a pair of parallel mounting plates with mounting members disposed between each pair of plates. The mounting members may be moved along the leaf spring in order to change the characteristic of the leaf spring.

JP H06 79610 U discloses a vehicle comprising an upwardly bowed single transverse leaf spring. The leaf spring comprises means being arranged to be moved along the leaf spring in order to change the characteristic of the leaf spring.

US 4,422,666 discloses a vehicle suspension system comprising a leaf spring which can be adapted to fit different sizes and types of vehicles. The leaf spring is supported by upper and lower bearing members in the form of rollers. The rollers can be moved along the leaf spring in order to change the characteristic of the leaf spring.

### Summary of Invention

The present invention intends to overcome the issues of prior art through a suspension as is laid out in the independent claims.

The present invention relates to a suspension for a vehicle according to appended claim 1.

The leaf spring comprises a first discrete location and a second discrete location for the first and second spring seats to be moved to.

By allowing the spring seats to take up different positions along the leaf spring the spring rate of the leaf spring may be varied. By varying the spring rate the suspension of the vehicle is made harder or softer depending on where the spring seats are positioned. Spring seats positioned near the centre of the leaf spring gives rise to a softer suspension whereas spring seats located near the edges of the leaf spring gives rise to a harder suspension. By having to only adjust the location of the spring seats during assembly or service or repair the characteristics of the leaf spring, i.e. the spring rate of the leaf spring is easily adjusted.

The suspension comprises a leaf spring, where the leaf spring comprises discrete locations for the first and second spring seats to be moved to, and the subframe may comprise holes corresponding to the discrete locations of the leaf spring where the first and second spring seats may be adapted to be fastened to the subframe by fastening means adapted to be secured in the holes in the subframe and in the spring seats.

By having discrete locations fixed spring rates for different leaf springs may be calculated in advance allowing for an easier set up for instance during assembly or during service or repair. This makes the assembly of vehicles adapted to special customer needs easier. At the same time normal assembly is also made easier. During assembly, instead of having a multitude of coil springs to allow for different suspension settings, one leaf spring or a few leaf springs with different characteristics in combination with the possibility of selecting the location of the spring seats may cover a large variety of suspension settings. It also allows for a user to change the suspension setting at for instance a vehicle repair shop should he not be satisfied with the factory settings.

The discrete locations of the leaf spring may comprise one of: lumps, indentations, cavities or protrusions and the spring seats may be adapted to be secured to the discrete location of the leaf spring by means of said lumps, indentations, cavities or protrusions.

The first and second spring seats are movable by at least one actuator operatively connected to the first and second spring seats. The actuator may be a mechanical actuator or alternatively an electrical or hydraulic actuator.

As an alternative to fixed locations only allowed the spring rate to be adjusted during assembly or service/repair requiring access to the leaf spring the spring seats may be allowed to be altered after assembly. This may be done by attaching an actuator to the subframe of the vehicle. The reason for attaching the actuator to the subframe and not to the leaf spring is to allow for the leaf spring to move during spring action of the leaf spring. The actuator is operatively attached to the spring seats allowing for control of the location of the spring seats by means of an input signal to the actuator. The input signal may for instance come from a driver or from service personnel or from a sensor located in the vehicle. One advantage is not having to remove parts of the vehicle in order to access the leaf spring.

As previously described the leaf spring comprises discrete locations but in an embodiment not according to the invention the leaf spring may also be smooth allowing the position of the spring seats to be varied continuously along the leaf spring. The reason for allowing the spring seats to be moved continuously is to be able to fine tune the spring rate of the leaf spring.

The first and second spring seats may be arranged to be attached to the subframe by means of at least one opening in the subframe, where the at least one opening in the subframe may have a transverse extension.

In the case where the at least one opening in the subframe has a transverse extension, the extension of the openings correspond to the extension of the positions of the discrete locations for the first and second spring seats to be moved to.

The spring seats may be arranged such that they are movably attached to the opening in the subframe, i.e. their movement is limited to a transverse motion only. They may be attached to an opening in the subframe by means of a bearing arrangement or any other arrangement that allows for transverse motion but not longitudinal motion.

The position of the spring seats may be adjusted by means of the output of a level sensor, the level sensor being able to determine the vehicle load by monitoring the wheel position relative to the vehicle body. This is valid for both the case where the spring seats have discrete locations and where they, not according to the invention, can be moved continuously. This may be useful for instance to be able to compensate for a heavy load such as for instance a trailer or another form of towed carriage attached to the vehicle. The position of the spring seats may be adjusted by the actuator.

The position of the spring seats may be adjusted dynamically by means of the output of at least one sensor, the at least one sensor being able to determine the vehicle dynamics. This may be used to compensate for changing vehicle dynamics that may change due to changing conditions of the vehicle or the road. It may also be used as to compensate for roll steer. The position of the spring seats may be adjusted by the actuator.

The position of the spring seats may be adjusted by means of input from the driver, the driver being able to set a desired spring rate comfort level by adjusting a comfort level means. A driver may want to change the suspension setting between different modes such as a comfort mode or a sport mode. The position of the spring seats may be adjusted by the actuator.

The suspension may comprise a leaf spring where the leaf spring comprises a first leaf spring part and a second leaf spring part, the first leaf spring part being connected to the first lower control arm and the subframe, the second leaf spring part being connected to the second lower control arm, the first spring seat being adapted to be movable along the first leaf spring part and the second spring seat being adapted to be movable along the second leaf spring part. This is to allow the use of a leaf spring where there is not enough room for one continuous leaf spring. Instead the leaf spring may be divided into a first part and a second part that may be mounted at an angle. This allows the use of a suspension with a leaf spring in the front or rear suspension of a vehicle where for instance an engine or another integral part of the vehicle may be in the way of a continuous leaf spring.

The invention also relates to a method for adjusting a suspension for a vehicle where the value of the spring rate of the leaf spring may be adjusted by moving the spring seats along the leaf spring between a first discrete location (8) and a second discrete location (9) of the leaf spring (5).

The method may comprise moving the spring seats an equal distance away from a longitudinal centre line of the leaf spring in order to increase the value of the spring rate.

The method may comprise moving the spring seats an equal distance towards a longitudinal centre line of the leaf spring in order to decrease the value of the spring rate.

The method may comprise moving the spring seats individually along the leaf spring in order to correct for roll of the vehicle. Individually means that the spring seats do not have to be moved an equal distance

The invention also relates to a leaf spring system according to appended claim 13.

### Brief Description of Drawings

Figure 1 schematically shows a rear suspension of a vehicle;
Figure 2 schematically shows a leaf spring;
Figure 3 schematically shows a leaf spring arrangement;
Figure 4 schematically shows a leaf spring according to a first embodiment of the invention;
Figure 5 schematically shows a leaf spring arrangement according to the first embodiment of the invention.

### Detailed description of drawings

In the figures the same reference number is used for like features. In the description transverse direction, transversely and similar means a direction along an axis perpendicular to the normal travel direction of a vehicle, i.e. in a direction from one side of a vehicle to another side of a vehicle. Similarly, longitudinal direction, longitudinally or similar means a direction along an axis in the normal travel direction, i.e. in a direction from the rear of a vehicle to the front of a vehicle. A longitudinal centre line is an imagined line extending in a longitudinal direction located in the transverse centre of a vehicle, i.e. at an equal distance from both longitudinal sides of a vehicle.

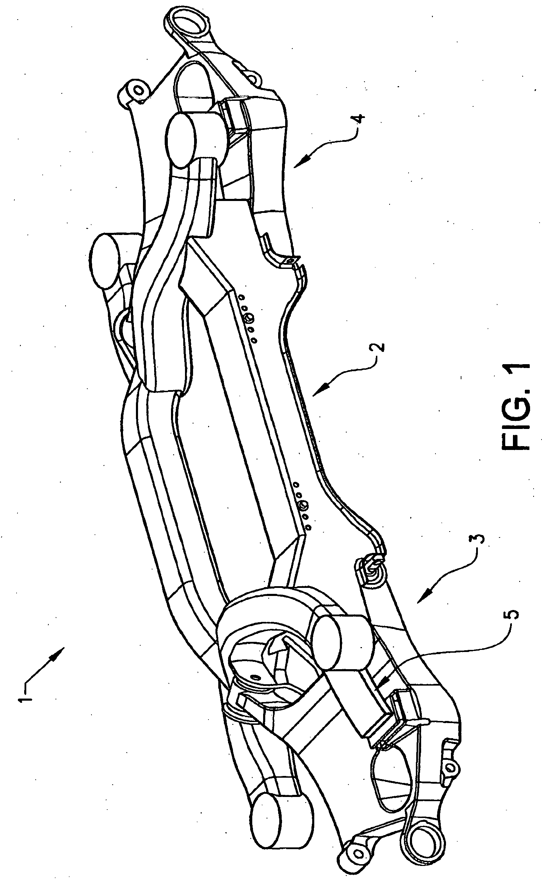

Figure 1 schematically shows a rear suspension 1 of a vehicle comprising a subframe 2, a first lower control arm 3, a second lower control arm 4 and a leaf spring 5. The subframe 2 is arranged to be attached to the chassis of the vehicle. The leaf spring 5 is attached to the first lower control arm 3 and the second lower control arm 4 by any suitable means known in the art.

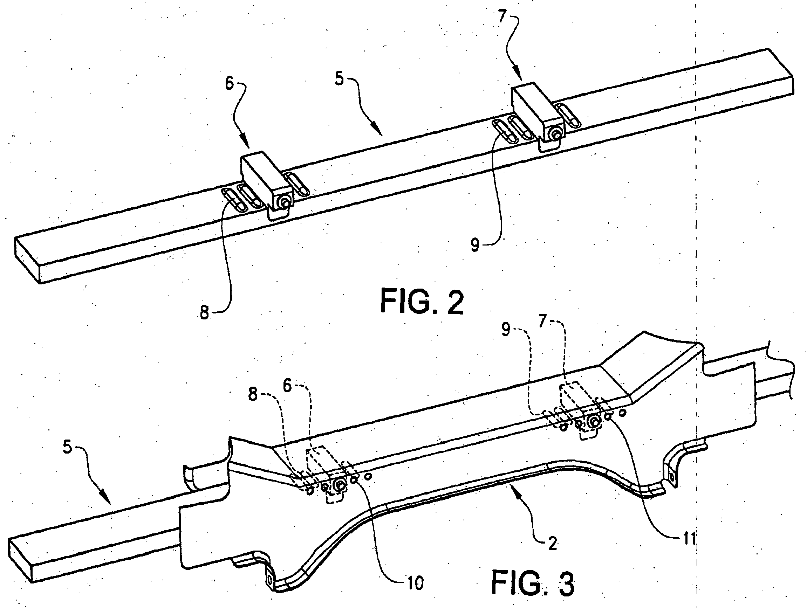

Figure 2 schematically shows a leaf spring 5. The leaf spring 5 comprises a first spring seat 6 and a second spring seat 7. The first and second spring seats 6, 7 are arranged to be movable along the leaf spring 5. The leaf spring 5 further comprises first discrete locations 8 and second discrete locations 9 on which the spring seats 6, 7 are arranged to be placed. The discrete locations may be made up of lumps, indentations, cavities or protrusions or similar features enabling the spring seats 6, 7 to be placed on specific locations. The spring seats 6, 7 are arranged to be designed to have features corresponding to the lumps, indentations, cavities or protrusions or similar features of the leaf spring 5. The discrete locations 8, 9 may extend over the entire width of the leaf spring 5 or only a part of the width of the leaf spring 5. The discrete locations 8, 9 may be made up of one or more parts extending over the entire width of the leaf spring 5 or only a part of the width of the leaf spring 5. The number of discrete locations may be one or more depending on the type of vehicle the leaf spring is intended for. Preferably more than one discrete location is used in order to achieve the possibility to change the spring rate during assembly in order to be able to set a number of different settings for the spring rate for one type of vehicle depending on customer demand or to have a vehicle with the possibility to change the spring rate after assembly.

The value of the spring rate of the leaf spring may be adjusted by moving the spring seats along the leaf spring. Moving the spring seats an equal distance away from a longitudinal centre line of the leaf spring increases the value of the spring rate. Moving the spring seats an equal distance towards a longitudinal centre line of the leaf spring decreases the value of the spring rate. Moving the spring seats individually along the leaf spring changes the spring rate by a different amount on each side of the leaf spring.

Figure 3 schematically shows the spring seats 6, 7 attached to the subframe 2 by means of first set of holes 10 in subframe 2 and second set of holes 11 in subframe 2. The spring seats 6, 7 are fastened to the subframe by means of suitable fastening means known in the art such as bolts or screws. The fastening means are arranged to be fastened during assembly of the vehicle and are arranged to be loosened in order to move the spring seats during for instance service of the vehicle in order to change the location of the spring seats and thereby change the spring rate of the leaf spring 5. The number of holes in the first set of holes 10 and the second set of holes 11 are preferably the same but may be different if an application demands it. In figure 3 the distance between the holes in the set of holes 10, 11 are uniform. The distance between the holes in the set of holes 10, 11 may however vary for instance depending on the desired settings of the spring rate of leaf spring 5, the weight of the vehicle loaded and unloaded or the design of the leaf spring 5.

The positions of the holes 10, 11 in the subframe are intended to correspond to the positions of the discrete locations 8, 9 of the leaf spring 5. This means that the holes 10, 11 are aligned with the discrete locations 8, 9 of the leaf spring 5 enabling the spring seats 6, 7 located at one of the discrete locations 8, 9 to be fastened to the subframe 2 by means of suitable fastening means.

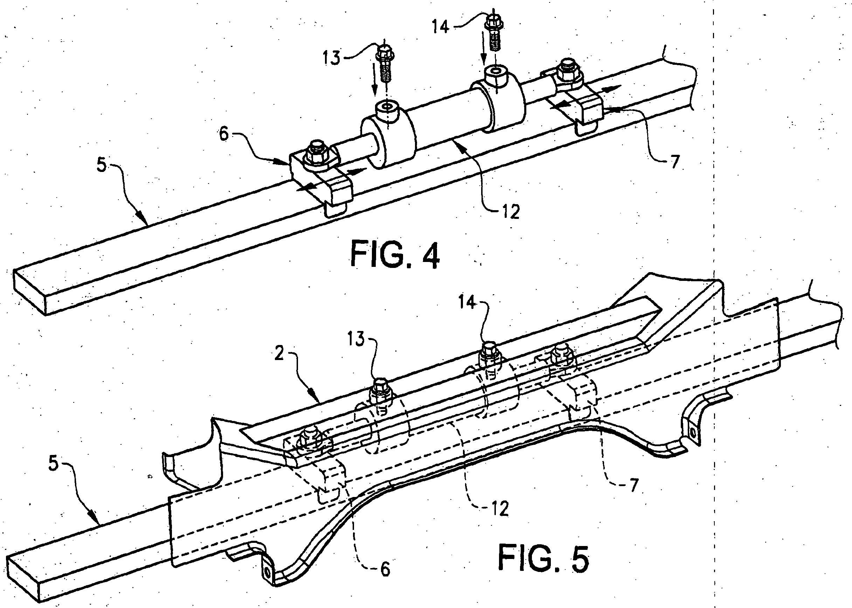

Figure 4 schematically shows a leaf spring 5 according to a first embodiment of the invention. Here an actuator 12 is fastened to the subframe 2. The actuator 12 is operatively connected to the spring seats 6, 7 in order for the actuator 12 to be able to move the spring seats 6, 7 in the direction of the arrows upon a command to the actuator 12, i.e. along the leaf spring 5 in a transverse direction of the vehicle. The actuator 12 may be an electrical actuator, a hydraulic actuator or a mechanical actuator. Other kinds of actuators are of course possible. The actuator 12 is arranged to receive output signals from various kinds of output sources such as sensors or vehicle control systems. The output signals are converted to suitable input signals for the actuator 12 determining the distance the spring seats 6, 7 are to be moved. The leaf spring comprises discrete locations 8, 9 as described above but may in an embodiment not according to the invention also be essentially smooth in order for the actuator to be able to adjust the location of the spring seats 6, 7 continuously. The first spring seat 6 does not have to be moved an equal distance as the second spring seat 7 but may be moved a greater or a smaller distance or not be moved at all depending on how the suspension is meant to be adjusted.

When a leaf spring 5 with discrete locations 8, 9 uses an actuator 12 to adjust the location of the spring seats 6, 7, the spring seats may be adapted to have features corresponding to the lumps, indentations, cavities or protrusions or similar features of the leaf spring 5 on all sides of the spring seats 6, 7. The spring seats 6, 7 are arranged to be moved by rolling along the leaf spring 5 between the discrete locations 8, 9, i.e. by for instance rotating a quarter turn between each discrete location. Other designs of the spring seats 6, 7 shown in the figures allows for different arrangements of the spring seats 6, 7 to be moved between the discrete locations.

Fastening means 13, 14 are used to fasten the actuator 12 to the subframe 2. The fastening means 13, 14 may be any suitable fastening means known in the art. In figure 4 the fastening means 13, 14 are shown separately.

Figure 5 schematically shows the leaf spring 5 according to the first embodiment of the invention with the actuator 12 fastened to the subframe 2 by means of the fastening means 13, 14.

The subframe 2 of figure 5 may also comprise openings (not shown) having a transverse extension along the leaf spring 5. The size of the openings corresponds to the amount of adjustment that is desirable and may be varied depending on the model of the vehicle. The spring seats 6, 7 may in this case be arranged to be fastened to the openings in such a way that they can run freely in the openings. The fastening means used may be any fastening means known in the art for allowing a bolt or screw or similar to be allowed to run freely in an opening. The openings may have an extension corresponding to the distance between the inner and outer holes of holes 10, 11 described in the first embodiment of the invention but may have an extension that exceeds or is less than the distance between the outer and inner holes of holes 10, 11.

The actuator 12 may be used to adjust the position of the spring seats by means of the output signal of a level sensor connected to the vehicle. The level sensor may be any sensor suitable for this application known in the art. The position of the spring seats may also be adjusted dynamically by the actuator 12 by means of the output signal of at least one vehicle sensor being able to determine the vehicle dynamics. The vehicle sensor may be any sensor suitable for determining vehicle dynamics known in the art. The actuator 12 may also receive as input signals the output from a vehicle control system being operated by a driver or a passenger of the vehicle. The driver may be able to set a desired spring rate comfort level by adjusting a comfort level means. Suitable comfort level means may be a knob or a dial or another form or analogue output, but the comfort level means may also be integrated into the digital control system of the vehicle and may be adjusted by changing a digital value, the digital value being transformed into a analogue or digital signal suitable for the actuator 12. When the actuator 12 is a mechanical actuator the actuator 12 may be operated by a rod that on one side is right hand threaded and on the other side is left hand threaded. In the middle of the rod a sleeve is assembled around the rod with corresponding right hand and left hand threads. Rotation of this sleeve moves the spring seats 6, 7 along the leaf spring 5.

The suspension may also be adapted in such a way that the leaf spring 5 comprises a first leaf spring part and a second leaf spring part (not shown), the first leaf spring part being connected to the first lower control arm and the subframe, the second leaf spring part being connected to the second lower control arm. The first spring seat is adapted to be movable along the first leaf spring part and the second spring seat is adapted to be movable along the second leaf spring part. This variation of the invention may be used together with any of the described above features. Adaptations for making the invention function with a leaf spring 5 comprising a first leaf spring part and a second leaf spring part such as for instance using two actuators, one for each leaf spring part and adjusting the subframe 2 or similar to be able to mount the two leaf spring parts lie well within the scope of the invention.

The way the spring seats 6, 7 are fastened to the actuator 12 are illustrated as an example and is not to be limiting. Any suitable way of fasten the spring seats 6, 7 to an actuator 12 falls within the scope of the invention. The spring seats 6, 7 are shown to be located on top of the leaf spring 5. Other placements of the spring seats 6, 7 in relation to the leaf spring 5 fall within the scope of the invention.

The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. Suspension (1) for a vehicle, the suspension (1) comprising a subframe (2) connected to a chassis of the vehicle, a first lower control arm (3) and second lower control arm (4) connected to the subframe (2) and a leaf spring (5) transversally mounted in the suspension (1) being arranged to be connected to the first lower control arm (3) and the second lower control arm (4) and directly or indirectly connected to the subframe (2), the suspension (1) comprises a first spring seat (6) and a second spring seat (7); the first spring seat (6) and the second spring seat (7) being arranged to be movable along the leaf spring (5) allowing for the spring rate of the leaf spring (5) to be varied depending on the position of the spring seats (6, 7), **characterized in that** the first and second spring seats (6, 7) are movable by at least one actuator (12) operatively connected to the first and second spring seats (6, 7), and that the leaf spring (5) comprises discrete locations (8, 9) for the first and second spring seats (6, 7) to be moved to.

2. Suspension (1) according to claim 1, **characterized in that** the first and second spring seats (6, 7) are arranged to be attached to the subframe (2) by means of at least one opening in the subframe (2), the at least one opening in the subframe (2) having a transverse extension.

3. Suspension (1) according to claim 1, **characterized in that** the at least one actuator (12) is an electrical or hydraulic actuator.

4. Suspension (1) according to claim 1, **characterized in that** the at least one actuator (12) is a mechanical actuator.

5. Suspension (1) according to any one of claims 1-4, **characterized in that** the at least one actuator (12) adjusts the position of the spring seats (6, 7) by means of an output of at least one level sensor, the at least one level sensor being able to determine the vehicle load by monitoring the wheel position relative to the vehicle body.

6. Suspension (1) according to any one of claims 1-4, **characterized in that** the at least one actuator (12) adjusts the position of the spring seats (6, 7) dynamically by means of an output of at least one sensor, the at least one sensor being able to determine the vehicle dynamics.

7. Suspension (1) according to any one of claims 1-4, **characterized in that** the at least one actuator (12) adjusts the position of the spring seats (6, 7) by means of an input from a driver, the driver being able to set a desired spring rate comfort level by adjusting a comfort level means.

8. Suspension (1) according to any one of the preceding claims, **characterized in that** the leaf spring (5) comprises a first leat spring part and a second leaf spring part, the first leaf spring part being connected to the first lower control arm (3) and the subframe (2), the second leaf spring part being connected to the second lower control arm (4), the first spring seat (6) being adapted to be movable along the first least spring part and the second spring seat (7) being adapted to be movable along the second leaf spring part.

9. Method for adjusting a suspension (1) for a vehicle according to any of the preceding claims, **characterized in that:**
- adjusting the value of the spring rate of the leaf spring (5) by moving the spring seats (6, 7) along the leaf spring (5) between a first discrete location (8) and a second discrete location (9) of the leaf spring (5).

10. Method according to claim 9, **characterized in that** the method comprises:
- moving the spring seats (6, 7) an equal distance away from a longitudinal centre line of the leaf spring (5) in order to increase the value of the spring rate.

11. Method according to claim 9 or 10, **characterized in that** the method further comprises:
- moving the spring seats (6, 7) an equal distance towards a longitudinal centre line of the leaf spring (5) in order to decrease the value of the spring rate.

12. Method according to any one of claims 9-11, **characterized in that** the method further comprises:
- moving the spring seats (6, 7) individually along the leaf spring (5) in order to correct for roll of the vehicle.

13. Leaf spring (5) system for a suspension (1) for a vehicle, the leaf spring (5) system comprises a transversally mounted leaf spring (5) and spring seats (6, 7) adapted to be movable along the leaf spring (5) allowing for the spring rate of the leaf spring (5) to be varied depending on the position of the spring seats (6, 7), **characterized in that** the leaf spring (5) comprises a first discrete location (8) and a second discrete location (9) for the first and second spring seats (6, 7) to be moved to, and that the first and second spring seats (6, 7) are movable by at least one actuator (12) operatively connected to the first and second spring seats (6, 7).

## Patentansprüche

1. Aufhängung (1) für ein Fahrzeug, wobei die Aufhängung (1) einen Unterrahmen (2) aufweist, der mit einem Chassis des Fahrzeugs verbunden ist, einen ersten unteren Steuerarm (3) und einen zweiten unteren Steuerarm (4), die mit dem Unterrahmen (2) verbunden sind, und eine Blattfeder (5), die quer in der Aufhängung (1) montiert ist, die eingerichtet ist, um mit dem ersten unteren Steuerarm (3) und dem zweiten unteren Steuerarm (4) verbunden zu sein und direkt oder indirekt mit dem Unterrahmen (2) verbunden zu sein, wobei die Aufhängung (1) einen ersten Federsitz (6) und einen zweiten Federsitz (7) aufweist; wobei der erste Federsitz und der zweite Federsitz (7) eingerichtet sind, um entlang der Blattfeder (5) beweglich zu sein, was es erlaubt, die Federrate der Blattfeder (5) in Abhängigkeit von der Position der Federsitze (6, 7) zu variieren, **dadurch gekennzeichnet, dass** der erste und der zweite Federsitz (6, 7) durch mindestens einen Stellantrieb (12), der betrieblich mit dem ersten und dem zweiten Federsitz (6, 7) verbunden ist, beweglich sind, und dass die Blattfeder (5) diskrete Stellen (8, 9) aufweist, zu welchen der erste und der zweite Federsitz (6, 7) bewegt werden.

2. Aufhängung (1) nach Anspruch 1, **dadurch gekennzeichnet, dass** der erste und der zweite Federsitz (6, 7) eingerichtet sind, um an dem Unterrahmen (2) mittels mindestens einer Öffnung in dem Unterrahmen (2) befestigt zu sein, wobei die mindestens eine Öffnung in dem Unterrahmen (2) eine Querausdehnung hat.

3. Aufhängung (1) nach Anspruch 1, **dadurch gekennzeichnet, dass** der mindestens eine Stellantrieb (12) ein elektrischer oder hydraulischer Stellantrieb ist.

4. Aufhängung (1) nach Anspruch 1, **dadurch gekennzeichnet, dass** der mindestens eine Stellantrieb (12) ein mechanischer Stellantrieb ist.

5. Aufhängung (1) nach einem der Ansprüche 1-4, **dadurch gekennzeichnet, dass** der mindestens eine Stellantrieb (12) die Position der Federsitze (6, 7) mittels einer Ausgabe mindestens eines Niveausensors einstellt, wobei der mindestens eine Niveausensor fähig ist, die Fahrzeuglast durch Überwachen der Radposition in Bezug zu der Fahrzeugkarosserie zu bestimmen.

6. Aufhängung (1) nach einem der Ansprüche 1-4, **dadurch gekennzeichnet, dass** der mindestens eine Stellantrieb (12) die Position der Federsitze (6, 7) dynamisch mittels einer Ausgabe mindestens eines Sensors einstellt, wobei der mindestens eine Sensor fähig ist, die Fahrzeugdynamik zu bestimmen.

7. Aufhängung (1) nach einem der Ansprüche 1-4, **dadurch gekennzeichnet, dass** der mindestens eine Stellantrieb (12) die Position der Federsitze (6, 7) mittels einer Eingabe von einem Fahrer einstellt, wobei der Fahrer fähig ist, ein gewünschtes Federraten-Komfortniveau durch Einstellen eines Komfortniveaumittels einzustellen.

8. Aufhängung (1) nach einem der vorhergehenden Ansprüche, **dadurch gekennzeichnet, dass** die Blattfeder (5) einen ersten Blattfederteil und einen zweiten Blattfederteil aufweist, wobei der erste Blattfederteil (5) mit dem ersten unteren Steuerarm (3) und dem Unterrahmen (2) verbunden ist, wobei der zweite Blattfederteil mit dem zweiten unteren Steuerarm (4) verbunden ist, wobei der erste Federsitz (6) angepasst ist, um entlang des ersten Blattfederteils beweglich zu sein und der zweite Federsitz (7) angepasst ist, um entlang des zweiten Blattfederteils beweglich zu sein.

9. Verfahren zum Einstellen einer Aufhängung (1) fur ein Fahrzeug nach einem der vorhergehenden Ansprüche, **gekennzeichnet durch:**
- Einstellen des Werts der Federrate der Blattfeder (5) durch Bewegen der Federsitze (6, 7) entlang der Blattfeder (5) zwischen einer ersten diskreten Stelle (8) und einer zweiten diskreten Stelle (9) der Blattfeder (5).

10. Verfahren nach Anspruch 9, **dadurch gekennzeichnet, dass** das Verfahren Folgendes aufweist:
- Bewegen der Federsitze (6, 7) über eine gleiche Entfernung von einer Längsmittenlinie der Blattfeder (5) weg, um den Wert der Federrate zu erhöhen.

11. Verfahren nach Anspruch 9 oder 10, **dadurch gekennzeichnet, dass** das Verfahren ferner Folgendes aufweist:
- Bewegen der Federsitze (6, 7) über eine gleiche Entfernung zu einer Längsmittenlinie der Blattfeder (5), um den Wert der Federrate zu verringern.

12. Verfahren nach einem der Ansprüche 9-11, **dadurch gekennzeichnet, dass** das Verfahren ferner Folgendes aufweist:
- Bewegen der Federsitze (6, 7) einzeln entlang der Blattfeder (5), um das Rollen des Fahrzeugs zu korrigieren.

13. Blattfeder (5)-System für eine Aufhängung (1) für ein Fahrzeug, wobei das Blattfeder (5)-System eine quer montierte Blattfeder (5) und Federsitze (6, 7) aufweist, die angepasst sind, um entlang der Blattfeder (5) bewegt zu werden, um das Variieren der Federrate der Blattfeder (5) in Abhängigkeit von der Position der Federsitze (6, 7) zu erlauben, **dadurch gekennzeichnet, dass** die Blattfeder (5) eine erste diskrete Stelle (8) und eine zweite diskrete Stelle (9) aufweist, zu welchen der erste und der zweite Federsitz (6, 7) bewegt werden, und dass der erste und der zweite Federsitz (6, 7) durch mindestens eine Stellantreibe (12), der betrieblich mit dem ersten une dem zweiten Federsitz (6, 7) verbunden ist, beweglich ist.

## Revendications

1. Suspension (1) pour un véhicule, la suspension (1) comprenant un faux châssis (2) raccordé à un châssis du véhicule, un premier bras de suspension inférieur (3) et un second bras de suspension inférieur (4) raccordés au faux châssis (2) et un ressort a lames (5) monté transversalement dans la suspension (1) et conçu pour être raccordée au premier bras de suspension inférieur (3) et au second bras de suspension inférieur (4) et directement ou indirectement raccordé au faux châssis (2), la suspension (1) comprenant un premier siège de ressort (6) et un second siège de ressort (7); le premier siège de ressort (6) et le second siège de ressort (7) étant conçus pour pouvoir être déplacés le long du ressort à lames (5) de façon a permettre une variation du taux d'élasticité du ressort à lames (5) en fonction de la position des sièges de ressort (6, 7), **caractérisée en ce que** les premier et second sièges de ressort (6, 7) peuvent être déplacés par au moins un dispositif d'actionnement (12) raccordé fonctionnellement aux premier et second sièges de ressort (6, 7), et que le ressort à lames (5) comprend des emplacements distincts (8, 9) auxquels les premier et second sièges de ressort (6, 7) sont destinés à être amenés.

2. Suspension (1) selon la revendication 1, **caractérisée en ce que** les premier et second sièges de ressort (6, 7) sont conçus pour être attachés au faux châssis (2) au moyen d'au moins une ouverture dans le faux châssis (2), l'au moins une ouverture dans le faux châssis (2) s'étendant transversalement.

3. Suspension (1) selon la revendications 1, **caractérisée en ce que** l'au moins un dispositif d'actionnement (12) est un dispositif d'actionnement électrique ou hydraulique.

4. Suspension (1) selon la revendication 1, **caractérisée en ce que** l'au moins un dispositif d'actionnement (12) est un dispositif d'actionnement mécanique.

5. Suspension (1) selon l'une quelconque des revendications 1 à 4, **caractérisée en ce que** l'au moins un dispositif d'actionnement (12) ajuste la position des sièges de ressort (6, 7) à l'aide de données en sortie d'au moins un capteur de niveau, l'au moins un capteur de niveau ayant la capacité de déterminer la charge du véhicule en surveillant la position des roues par rapport à la carrosserie du véhicule.

6. Suspension (1) selon l'une quelconque des revendications 1 à 4, **caractérisée en ce que** l'au moins un dispositif d'actionnement (12) ajuste la position des sièges de ressort (6, 7) de manière dynamique à l'aide de données en sortie d'au moins un capteur, l'au moins un capteur ayant la capacité de déterminer la dynamique du véhicule.

7. Suspension (1) selon l'une quelconque des revendications 1 à 4, **caractérisée en ce que** l'au moins un dispositif d'actionnement (12) ajuste la position des sièges de ressort (6, 7) au moyen de données en entrée provenant d'un conducteur, le conducteur ayant la capacité de définir un niveau de confort de taux d'élasticité souhaité en ajustant un moyen de réglage de niveau de confort.

8. Suspension (1) selon l'une quelconque des revendications précédentes, **caractérisée en ce que** le ressort à lames (5) comprend une première partie de ressort à lames et une seconde partie de ressort à lames, la première partie de ressort à lames étant raccordée au premier bras de suspension inférieur (3) et au faux châssis (2), la seconde partie de ressort à lames étant raccordée au second bras de suspension inférieur (4), le premier siège de ressort (6) étant adapté pour pouvoir être déplacé le long de la première partie de ressort à lames et le second siège de ressort (7) étant adapté pour pouvoir être déplacé le long de la seconde partie de ressort à lames.

9. Procédé d'ajustement d'une suspension (1) pour un véhicule selon l'une quelconque des revendications précédentes, **caractérisé par:**
- l'ajustement de la valeur du taux d'élasticité du ressort à lames (5) en déplaçant les sièges de ressort (6, 7) le long du ressort à lames (5) entre un premier emplacement distinct (8) et un second emplacement distinct (9) du ressort à lames (5).

10. Procédé selon la revendication 9, **caractérisé en ce qu'**il comprend:
- l'éloignement des sièges de ressort (6, 7) d'une distance égale par rapport à une ligne médiane longitudinale du ressort à lames (5) afin d'augmenter la valeur du taux d'élasticité.

11. Procédé selon la revendication 9 ou 10, **caractérisé en ce qu'**il comprend en outre:
- le rapprochement des sièges de ressort (6, 7) d'une distance égale par rapport à une ligne médiane longitudinale du ressort à lames (5) afin de diminuer la valeur du taux d'élasticité.

12. Procédé selon l'une quelconque des revendications 9 à 11, **caractérisé en ce qu'**il comprend en outre:
- le déplacement des sièges de ressort (6, 7) de manière individuelle le long du ressort à lames (5) afin de corriger le roulis du véhicule.

13. Système de ressort à lames (5) destiné a une suspension (1) pour un véhicule, le système de ressort à lames (5) comprenant un ressort à lames (5) monté transversalement et des sièges de ressort (6, 7) adaptés pour pouvoir être déplacés le long du ressort à lames (5) de façon à permettre une variation du taux d'élasticité du ressort à lames (5) en fonction de la position des sièges de ressort (6, 7), **caractérisé en ce que** le ressort à lames (5) comprend un premier emplacement distinct (8) et un second emplacement distinct (9) auxquels les premier et second sièges de ressort (6, 7) sont destinés a être amenés, et que les premier et second sièges de ressort (6, 7) peuvent être déplacés par au moins un dispositif d'actionnement (12) raccordé fonctionnellement aux premier et second sièges de ressort (6, 7).
